# EUROPEAN PATENT APPLICATION

(11) **EP 2 700 376 A2**
(43) Date of publication of application: **26.02.2014**
(21) Application number: 13179888.6
(22) Date of filing: 09.08.2013
(51) Int. Cl.: A61C 5/02

(54) **Insert for ultrasonic irrigation to be engaged in a dental ultrasound device**

(30) Priority: 24.08.2012 BR 202012021320 U
(71) Applicant: Capelli, Alexandre, 14010-150 Centro, Ribeirao Preto/SP (BR)
(72) Inventor: Capelli, Alexandre, 14010-150 Centro, Ribeirao Preto/SP (BR)
(74) Representative: Pons Ariño, Angel

(57) **Abstract**

The present Utility Model Patent refers to an innovative constructive layout applied to an ultrasonic insert for irrigation to be engaged in a dental ultrasound device. The present invention is basically comprised of an elongated and slender rod (1) to be coupled to a dental ultrasound device, being that said rod has a fine inactive tip and a taper that increases from its tip toward the fastening part, in addition to being produced as a single component and having the inner part that penetrates the root canal smooth, having no cutting surface and, alternatively, can be made with different tip diameters, in different lengths of the active part and with different conicities of the active tip.

## Description

The present Utility Model Patent refers to an innovative constructive layout applied to an ultrasonic insert for irrigation to be engaged in a dental ultrasound device.

The state of the art related to this matter is formed of inserts which do not perform the ultrasonic irrigation in an efficient way. Such inserts have diameters and/or tapers that prevent them from penetrating to the most apical region of the root canals and do not have a cutting surface that comes in contact with the tooth, which can wear out or cling to the wall of the canal while proceeding the irrigation. Recent studies have demonstrated the great complexity of the canal system that exists within the roots of the teeth. Existing tools lack the capacity to clean the root canal system, and then several other resources are being used to act in areas where the instruments cannot reach during root canal treatment.
Outside there is an ultrasonic edge for the same purpose as this, but it is produced in two parts, of two different materials, which are subsequently joined. This can lead to a loss of efficiency in ultrasonic transmission.

Aiming to arrive at a really superior and differentiated product from the prior state of the art is that it was developed the present "INSERT FOR ULTRASONIC IRRIGATION TO BE ENGAGED IN A DENTAL ULTRASOUND UNIT" which, in order to facilitate the reading of the text, will then be mentioned simply as "INSERT".

What is being proposed is the use of a specially developed ultrasonic tip, according to anatomical criteria, to perform ultrasonic activation of the water disinfectant solution, in order to clean the regions where the instruments do not act during the root canal treatment.

With the "INSERT" coupled to the ultrasonic device, the same will transmit the ultrasonic vibration to the disinfectants irrigating solutions used during root canal treatment, activating them and promoting physical phenomena such as cavitation, micro acoustic vaporization, among others. This procedure is called Passive Ultrasonic Irrigation Protocol. The devices make use of similar files attached to adapters to transmit ultrasonic vibration. The files have a cutting surface which with ultrasonic vibration can cause wear on the root canal walls and change the original trajectory of the root canals, causing errors in surgical procedure.

The present "INSERT" is produced preferably stainless steel. It is a solid, smooth piece with no active tip, having therefore no adapters or other fitting devices that result in the loss of transfer in the power generated from the ultrasonic device. The novelty is an ultrasonic, inactive and smooth tip at its end without a cutting surface, produced in a single piece in a single production step, having a stem diameter compatible with the anatomy of the root canals. Also the thin tip, blunt and without an end, adapts to the anatomy of root canals and promotes the ultrasonic activation of the irrigating solution, enhancing its cleaning without causing wear on the root canal walls.

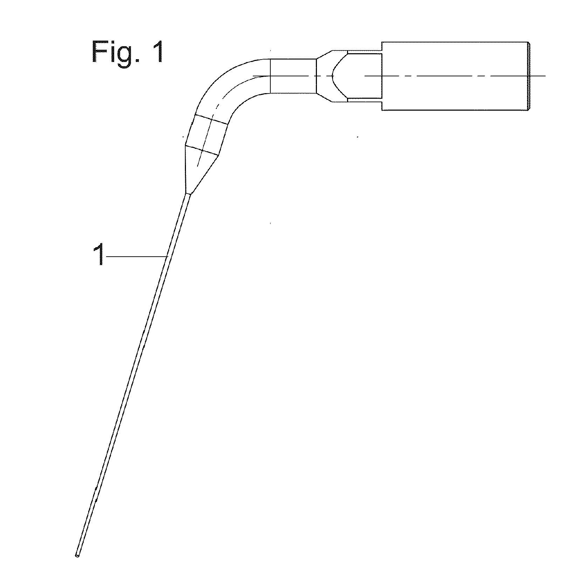

Fig. 1 shows the "INSERT" in a side view.

In accordance with the drawing, the "INSERT" is basically comprised of an elongated and slender rod (1) to be coupled to a dental ultrasound device, being that said rod has a fine inactive tip and a taper that increases from its tip toward the fastening part, in addition to being produced as a single and smooth part, which penetrates the root canal, having no cutting surface.

Alternatively, one can produce the "INSERT" with different tip diameters, different lengths of the active part and with different conicities of the active part.

According to its operation, the rod (1) must be connected to an dental ultrasonic device. The professional should make sure that it is fully secured and locked. A power of at least 30% must be programmed in the equipment to prevent damage to the device.

The "INSERT" should then be brought inside the root canal which, in turn, needs to be filled with irrigating solution for the treatment of the canals. After properly positioned, the "INSERT" shall be activated for a period of about 20 seconds, preferably without touching the walls of the root canal so that its action is more effective. Once that is done, one must wash the channel thoroughly with the irrigating solution and again fill the canal with the solution and repeat the use protocol two more times. Therefore, there shall be three applications of about 20 seconds for each canal. This action should be performed on all canals that are being subjected to the endodontic treatment.

After the above explanations, all the advantages of the present "INSERT FOR ULTRASONIC IRRIGATION TO BE ENGAGED IN A DENTAL ULTRASOUND DEVICE" should be known on the state of the art and one can say beyond any doubt that from the set of its technical characteristics, the device has full conditions to claim granting of a Patent of Utility Model.

## Claims

1. Insert for ultrasonic irrigation to be engaged in a dental ultrasonic device Characterized as being basically comprised of an elongated and slender rod (1) to be coupled to a dental ultrasound device, being that said rod has a fine inactive tip and a taper that increases from its tip toward the fastening part, in addition to being produced as a single component and having the inner part that penetrates the root canal smooth, having no cutting surface and, alternatively, can be made with different tip diameters, in different lengths of the active part and with different conicities of the active tip.
